# EUROPEAN PATENT SPECIFICATION

(11) **EP 2 517 338 B1**
(45) Date of publication and mention of the grant of the patent: **29.04.2015**
(21) Application number: 10799002.0
(22) Date of filing: 16.12.2010
(51) Int. Cl.: H02K 3/38

(54) **HERMETIC COMPRESSOR WITH AN INSULATING JACKET**
HERMETISCHER VERDICHTER MIT ISOLIERMANTEL
COMPRESSEUR HERMÉTIQUE ÉQUIPÉ D'UNE CHEMISE ISOLANTE

(30) Priority: 23.12.2009 TR 200909707
(43) Date of publication of application: 31.10.2012
(73) Proprietor: Arçelik Anonim Sirketi, 34950 Istanbul (TR)
(72) Inventor: CETINTURK, Tugba, 34950 Istanbul (TR)
(86) International application number: PCT/EP2010/069851
(87) International publication number: WO 2011/076654

(56) References cited:
- WO-A1-2008/053004
- WO-A1-2008/145760
- JP-A- 59 072 957
- US-A- 5 957 671

## Description

The present invention relates to a hermetic compressor comprising an insulating jacket mounted to the compressor block.

The stator of the hermetic compressor motor used in cooling devices such as refrigerators, is produced by placing windings composed of conducting wires into the slots on the stator stack composed of magnetic sheets and the windings form the parts referred to as winding head by extending towards the outside through the opposite faces of the stator stack.
Moreover, a metal compressor block placed on the stator is situated in the compressor and the compressor block carries basic mechanical elements such as cylinder, piston, crank and piston rod. The compressor block is seated onto the stator stack such as to be over the winding head. A gap of minimum 2 mm has to be left between the compressor block and the winding head for security reasons such that no current jump (electric leakage) between the winding wires and the block occur when current is applied to the stator windings. In order to create the said gap, stator windings are pressed in presses to be formed. In most situations, the number of stator windings requires to be increased for positive contribution to compressor motor efficiency, however the safety gap required to be left between the compressor block and the windings prevents the number of windings from being increased. In order to solve this problem, in the state of the art, insulating elements produced from thin isolative plastic film having a thickness of 0.15-0.20 mm are placed between the stator winding head and the compressor block, however placing these insulating elements into the compressor motor create problems especially in terms of labor due to the shape of the winding head and the compressor block.

In International Patent Application No. WO2008145760, an insulating element placed between the coil core and the winding head is explained. The insulating element comprises a peripheral edge region seating onto the coil core and additional insulation extensions providing insulation between the flange extensions of the cylinder housing and the winding head.

In United States Patent No. US5957671, a film is explained which is used in the stator of the electric motor of a compressor, which provides insulating between the winding head and the compressor block, which is mounted onto the bearing part in the center of the compressor block by means of an opening situated in the middle thereof by being pushed:

The aim of the present invention is the realization of a hermetic compressor comprising an insulating jacket easily mountable placed onto the compressor block.

The hermetic compressor realized in order to attain the aim of the present invention, and explicated in the first claim and the respective claims thereof comprises a stator having the stator stack to which the windings composed of conducting wires are placed, a winding head composing the portion of the windings extending towards outside from the upper surface of the stator stack, a compressor block seated on the upper surface of the stator stack, an insulating jacket seating by extending from the compressor block to the upper surface of the stator stack and produced from polyester film and mounted onto the compressor block.

The insulating jacket has a body in flat sheet form covering the lower surface of the compressor block facing the winding head and sleeves connected to the body, extending to the upper surface of the stator stack vertical to the body from the edges thereof and covering the supporting legs by surrounding.

In an embodiment of the present invention, the insulating jacket is produced from polyester film from which the slot insulations are produced which are used for providing insulation between the winding slots on the stator stack and the windings, thus advantage in terms of material cost is provided.

In another embodiment of the present invention the planar body of the insulating jacket and the sleeves are produced as a single piece.

The insulating jacket is easily mounted onto the compressor block by means of the sleeves mounted over the supporting legs, provides a complete insulation by covering all the surfaces of the compressor block having the risk of contacting the winding head and does not slide off from its place due to the vibrations of the motor during the operation of the compressor.

The hermetic compressor realized in order to attain the aim of the present invention is illustrated in the attached figures, where:
Figure 1 - is the cross sectional view of a hermetic compressor.
Figure 2 - is the perspective view of an insulating jacket.
Figure 3 - is the perspective view of a compressor block, an insulating jacket and a stator.

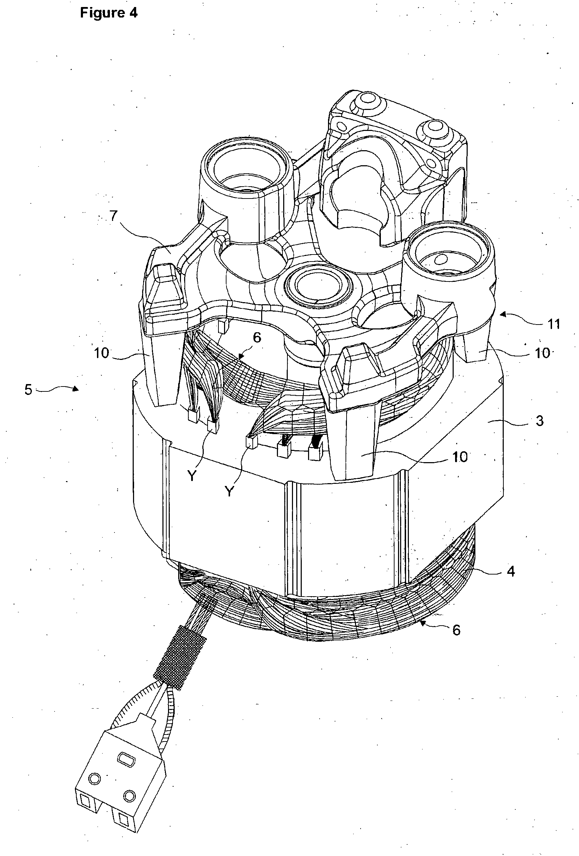

Figure 4 - is the perspective view of a stator and a compressor block placed onto the stator by mounting the insulating jacket between compressor block and stator.

The elements illustrated in the figures are numbered as follows:
1. Hermetic compressor
2. Casing
3. Stator stack
4. Winding
5. Stator
6. Winding head
7. Compressor block
8. Supporting leg
9. Body
10. Sleeve
11. Insulating jacket

Hermetic compressor (1) suitable for being used in cooling devices such as refrigerators comprises a casing (2), a stator (5) located in the casing (2), having a stator stack (3) composed of laminations and one or more than one winding (4) composed of conducting wires wound on the slots on the stator stack (3), more than one winding head (6) forming the portions of the windings (4) extending towards outside from the opposite faces of the stator stack (3), a compressor block (7) carrying and/or bearing basic mechanical elements such as cylinder, piston, crank and piston rod, placed on the upper surface of the stator stack (3) such that the lower surface thereof does not contact the winding head (6) and more than one supporting leg (8) seating by extending from the compressor block (7) towards the upper surface of the stator stack (3) and carrying the compressor block (7) on the stator stack (3).

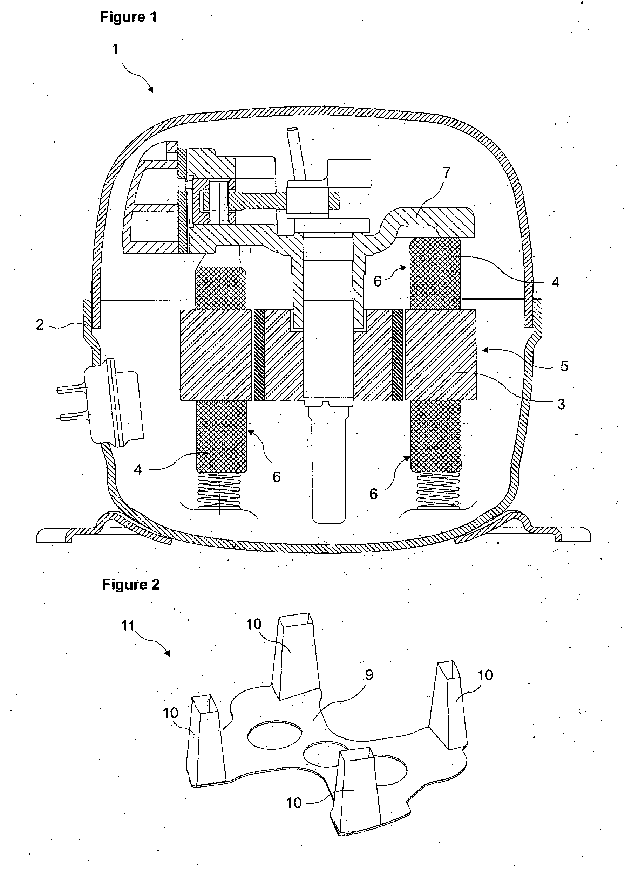

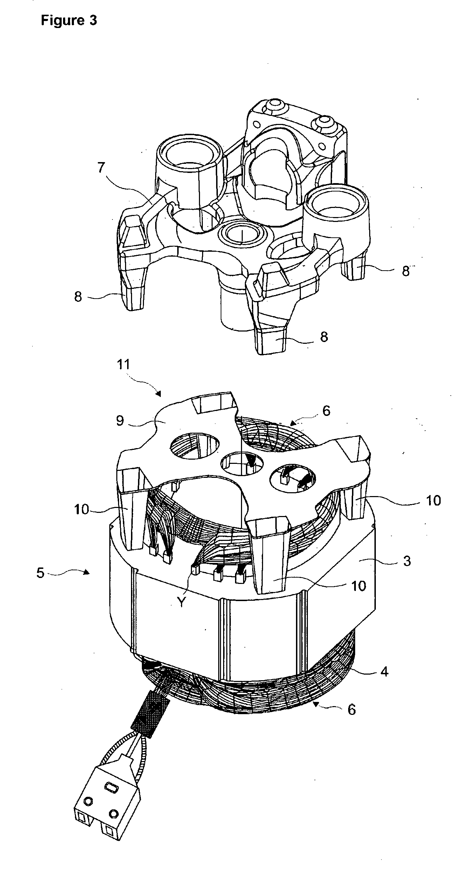

The hermetic compressor (1) of the present invention comprises a body (9) in flat sheet form covering the lower surface of the compressor block (7) facing the winding head (6) and an insulating jacket (11) connected to the body (9), having more than one sleeve (10) extending to the upper surface of the stator stack (3) vertical to the body (9) from the edges thereof and covering the supporting legs (8) which are seated therein by surrounding them all around, produced from plastic material and mounted to the compressor block (7) (Figure 2, Figure 3).

In order to mount the insulating jacket (11) to the compressor block (7), the sleeves (10) are mounted over the supporting legs (8) and the instaling jacket (11) is pushed towards the compressor block (7). Since the supporting legs (8) act as a guide for the assembly of the insulating jacket (11), the insulating jacket (11) is provided to be mounted to the compressor block (7) and not to move after being mounted with a simple manual labor. The insulating jacket (11) provides a complete insulation between the winding head (6) and the compressor block (7) by covering all the surfaces of the compressor block (7) facing to the winding head (6) including the supporting legs (8) by means of the body (9) and the sleeves (10). Since the risk of the winding head (6) contacting not only the lower surface of the compressor block (7) but also the inner surfaces of the supporting legs (8) is eliminated, the winding (4) number can be increased to enhance motor efficiency.

In an embodiment of the present invention, the insulating jacket (11) is produced from the polyester film from which the slot insulations (Y) used for providing insulation between the winding (4) slots on the stator stack (3) and the windings (4) are produced.

In another embodiment of the present invention, the body (9) forming the insulating jacket (11) and the sleeves (10) on the edge thereof are produced as a single piece.

The insulating jacket (11) is easily mounted to the compressor block (7) by means of the sleeves (10) mounted over the supporting legs (8), and provides a complete insulation by covering all the surfaces of the compressor block (7) which have a risk to contact the winding head (6). Moreover, by means of the sleeves (10) mounted over the supporting legs (8), the insulating jacket (11) is prevented from sliding off its place due to the vibrations of the motor during the operation of the compressor (1).

It is to be understood that the present invention is not limited by the embodiments disclosed above and a person skilled in the art can easily introduce.different embodiments. These should be considered within the scope of the protection disclosed by the claims of the present invention.

## Claims

1. A hermetic compressor (1) comprising a casing (2), a stator (5) located in the casing (2), having a stator stack (3) composed of laminations and one or more than one winding (4) composed of conducting wires wound on the slots on the stator stack (3), more than one winding head (6) forming the portions of the windings (4) extending towards outside from the opposite faces of the stator stack (3), a compressor block (7) placed on the upper surface of the stator stack (3) and more than one supporting leg (8) seating by extending from the compressor block (7) towards the upper surface of the stator stack (3) and carrying the compressor block (7) on the stator stack (3), **characterized by** an insulating jacket (11) having a body (9) in flat sheet form covering the lower surface of the compressor block (7) facing the winding head (6) and having more than one sleeve (10) extending to the upper surface of the stator stack (3) vertical to the body (9) from the edges thereof and covering the supporting legs (8) which are seated therein by surrounding them all around, produced from plastic material and mounted to the compressor block (7).

2. A hermetic compressor (1) as in Claim 1, **characterized by** the insulating jacket (11) produced from the polyester film from which the slot insulations (Y) used for providing insulation between the winding (4) slots on the stator stack (3) and the windings (4) are produced.

3. A hermetic compressor (1) as in Claim 1 or 2, **characterized by** the insulating jacket (11) the body (9) and the sleeves (10) of which are produced as a single piece.

## Patentansprüche

1. Hermetischer Kompressor (1), umfassend ein Gehäuse (2), einen Stator (5), dier im Gehäuse (2) angeordnet ist und einen Statorstapel (3) aus Blechen und einer oder mehreren Wicklungen (4), die aus leitfähigen Drähten gebildet sind, die in den Schlitzen am Statorstapel (3) gewickelt sind, mehrere Wicklungsköpfe (6), die die Abschnitte der Wicklungen (4) bilden, die sich von gegenüberliegenden Flächen des Statorstapels (3) nach außen erstrecken, einen Kompressorblock (7), der auf dem Statorstapel (3) angeordnet ist, und mehrere Stützbeine (8), die durch Erstrecken von dem Kompressorblock (7) zur Oberseite des Statorstapels (3) ruhen und den Kompressorblock (7) auf dem Statorstapel (3) tragen, **gekennzeichnet durch** einen Isolationsmantel (11) mit einem Körper (9) in flacher Blechform, der die Unterseite des Kompressorblocks (7), die dem Wicklungskopf (6) zugewandt ist, abdeckt und mehrere Hülsen (10) aufweist, die sich von den Kanten des Körpers (9) zum Statorstapel (3) erstrecken und die Stützbeine (8) tragen, die in ihnen ruhen, indem sie diese vollständig umgeben, und die aus Kunststoffmaterial hergestellt und am Kompressorblock (7) angebracht sind.

2. Hermetischer Kompressor (1) nach Anspruch 1, **dadurch gekennzeichnet, dass** der Isolationsmantel (11) aus der Polyesterfolie hergestellt ist, aus der die Schlitzisolationen (Y), die zum Bereitstellen von Isolation zwischen den Schlitzen der Wicklungen (4) an dem Statorstapel (3) dienen, und die Wicklungen (4) hergestellt sind.

3. Hermetischer Kompressor (1) nach Anspruch 1 oder 2, **dadurch gekennzeichnet, dass** der Isolationsmantel (11), der Körper (9) und die Hülsen (10) davon als ein einzelnes Teil hergestellt sind.

## Revendications

1. Un compresseur hermétique (1) comprenant un corps (2), un stator (5) situé dans le corps (2) et présentant un empilement de stator (3) composé de feuilletages et un ou plusieurs enroulements (4) composés de fils conducteurs sur les fentes sur l'empilement de stator (3), plus d'une tête d'enroulement (6) qui forme les parties des enroulements (4) s'étendant vers l'extérieur à partir des faces opposées de l'empilement de stator (3), un bloc de compresseur (7) qui est placé sur l'empilement de stator (3) et plus d'un pied de support (8) s'étendant à partir du bloc de compresseur (7) vers la surface supérieure de l'empilement de stator (3) et supportant le bloc de compresseur (7) sur l'empilement de stator (3), **caractérisé par** une enveloppe isolante (11) qui présente un corps (9) en forme de tôle plate couvrant la surface inférieure du bloc de compresseur (7) faisant face à la tête d'enroulement (6) et présente plus d'une chemise (10) s'étendant à partir des bords du corps (9) vers l'empilement de stator (3) et couvrant les pieds de support (8) qui sont placés dedans en les entourant tout autour, produite d'un matériau plastique et montée au bloc de compresseur (7).

2. Un compresseur hermétique (1) selon la Revendication 1, **caractérisé par** l'enveloppe isolante (11) produite d'un film de polyester duquel les isolations de fente (Y) utilisées pour fournir l'isolation entre les fentes de l'enroulement (4) sur l'empilement de stator (3) et les enroulements (4) sont produits.

3. Un compresseur hermétique (1) selon la Revendication 1 ou 2, **caractérisé par** l'enveloppe isolante (11) dont le corps (9) et les chemises (10) sont produits en une seule pièce.
